# DEMANDE DE BREVET EUROPEEN

(11) **EP 3 222 905 A1**
(43) Date de publication de la demande: **27.09.2017**
(21) Numéro de dépôt: 17161691.5
(22) Date de dépôt: 17.03.2017
(51) Int. Cl.: F21S 8/10

(54) **MODULE LUMINEUX COMPORTANT AU MOINS UNE SOURCE LUMINEUSE AMOVIBLE**

(30) Priorité: 21.03.2016 FR 1652418
(71) Demandeur: Valeo Vision, 93012 Bobigny Cedex (FR)
(72) Inventeur: LETOUMELIN, Rémi, 77700 CHESSY (FR); CANONNE, Thomas, 78300 POISSY (FR)

(57) **Abrégé**

La présente invention concerne un module lumineux (10) pour véhicule automobile, ledit module lumineux (10) comprenant :
- un moyen optique (3) ;
- un support (5) du moyen optique (3) ;
- au moins une source lumineuse (7) logée dans le module lumineux (10), ladite source lumineuse (7) étant amovible et comprenant :
- des moyens d'émission de lumière (11) ;
- un support mécanique (13) des moyens d'émission de lumière (11) ;

- des moyens de déplacement (15) du moyen optique (3) agencés pour permettre un déplacement du moyen optique (3) entre :
- une position de verrouillage pour maintenir ladite source lumineuse (7) sur le support (5) du moyen optique (3) ; et
- une position de déverrouillage pour retirer ladite source lumineuse (7) du module lumineux (10).

## Description

### DOMAINE TECHNIQUE DE L'INVENTION

La présente invention concerne un module lumineux pour véhicule automobile ainsi qu'une source lumineuse associée au module lumineux.

Elle trouve une application particulière mais non limitative dans les dispositifs d'éclairage, tels que des projecteurs de véhicule automobile.

### ARRIÈRE-PLAN TECHNOLOGIQUE DE L'INVENTION

Un module lumineux pour véhicule automobile comprend de manière connue de l'homme du métier :
- un moyen optique;
- un support du moyen optique;
- au moins une source lumineuse logée dans le module lumineux.
La source lumineuse comprend :
- des moyens d'émission de lumière;
- un support mécanique des moyens d'émission de lumière.
La durée de vie d'une source lumineuse, telle qu'une puce émettrice semi-conductrice est globalement supérieure à 3 000 heures de fonctionnement. En cas de panne, la question du remplacement de cette source lumineuse se pose. Afin de remplacer une source lumineuse défectueuse, il est connu de retirer l'ensemble du module lumineux, c'est-à-dire le moyen optique et la source lumineuse défectueuse.
Un inconvénient de cet état de la technique, est que le remplacement de l'ensemble du module lumineux entraîne la mise au rebut d'éléments, tel que le moyen optique, éléments qui ne sont pas nécessairement défectueux. Il est ainsi nécessaire pour l'utilisateur d'acheter un nouveau module lumineux complet à chaque fois qu'une source lumineuse est défectueuse, ce qui rend plus coûteuse l'opération de remplacement du module lumineux.

Dans ce contexte, la présente invention vise à résoudre l'inconvénient précédemment mentionné.

### DESCRIPTION GENERALE DE L'INVENTION

A cette fin l'invention propose un module lumineux pour véhicule automobile, ledit module lumineux comprenant :
- un moyen optique ;
- un support du moyen optique ;
- au moins une source lumineuse logée dans le module lumineux, ladite source lumineuse étant amovible et comprenant :
   - des moyens d'émission de lumière ;
   - un support mécanique des moyens d'émission de lumière ;
- des moyens de déplacement du moyen optique agencés pour permettre un déplacement du moyen optique entre :
   - une position de verrouillage pour maintenir ladite source lumineuse sur le support du moyen optique ; et
   - une position de déverrouillage pour retirer ladite source lumineuse du module lumineux.
Ainsi, comme on va le voir en détail ci-après, en utilisant des moyens de déplacement du moyen optique pour permettre un déplacement de ce moyen optique entre une position de verrouillage et une position de déverrouillage, il est possible de libérer un espace pour retirer la source lumineuse défectueuse hors du module lumineux. Plus particulièrement, l'espace libéré par le déplacement du moyen optique permet de faire glisser le support mécanique sur lequel repose les moyens d'émission de lumière, sans avoir besoin de retirer le moyen optique. Seule la source lumineuse est alors remplacée, ce qui diminue le coût global de cette opération de maintenance. Selon des modes de réalisation non limitatifs, le module lumineux peut comporter en outre une ou plusieurs caractéristiques supplémentaires parmi les suivantes :
Dans un mode de réalisation non limitatif, les moyens de déplacement sont adaptés pour déplacer le moyen optique par rapport au support du moyen optique. En d'autres termes, le moyen optique est mobile par rapport à son support.

Dans un mode de réalisation non limitatif, le moyen optique est un réflecteur, une lentille, un guide de lumière ou un collimateur.

Dans un mode de réalisation non limitatif, le support du moyen optique est un radiateur.

Dans un mode de réalisation non limitatif, les moyens d'émission de lumière comportent une puce émettrice semi-conductrice.

Dans un mode de réalisation non limitatif, en position de verrouillage, les moyens d'émission de lumière de la source lumineuse sont positionnés dans une zone focale du moyen optique.

Dans un mode de réalisation non limitatif, le moyen optique comporte au moins une butée pour bloquer le positionnement de la source lumineuse dans le module lumineux.

Dans un mode de réalisation non limitatif, les moyens de déplacement sont agencés pour déplacer en translation et/ou en rotation le moyen optique.

Dans un mode de réalisation non limitatif, les moyens de déplacement comprennent un système à came.

Dans un mode de réalisation non limitatif, ledit système à came comprend :
- une came comportant une fente ;
- un pivot solidaire du support du moyen optique et adapté pour permettre la rotation de la came par rapport audit support de moyen optique ;
- un téton solidaire du moyen optique et adapté pour glisser dans la fente de la came lors de la rotation de ladite came.

Dans un mode de réalisation non limitatif, la fente de la came comporte une encoche de verrouillage pour le blocage de la came dans la position de verrouillage du moyen optique.

Dans un mode de réalisation non limitatif, la fente de la came a une forme oblongue.

Dans un mode de réalisation non limitatif, la fente de la came est courbée.

Dans un mode de réalisation non limitatif, la fente comprend une première partie s'étendant selon un premier rayon constant centré par rapport au pivot et une seconde partie s'étendant selon un second rayon évolutif.

Dans un mode de réalisation non limitatif, les moyens de déplacement comprennent en outre un pivot secondaire solidaire du support du moyen optique et adapté pour permettre la rotation du moyen optique autour de ce pivot secondaire lors de la rotation de la came autour du pivot.

Dans un mode de réalisation non limitatif, les moyens de déplacement comprennent un système à came secondaire, les deux systèmes à cames étant disposés en regard l'un de l'autre, de part et d'autre du moyen optique.

Dans un mode de réalisation non limitatif, ladite au moins une source lumineuse comprend en outre des moyens de préhension sur ledit support mécanique.

Il est en outre proposé une source lumineuse adaptée pour être logée dans un module lumineux pour véhicule automobile, ladite source lumineuse comprenant :
- des moyens d'émission de lumière ;
- un support mécanique des moyens d'émission de lumière ;
- des moyens de préhension sur ledit support mécanique.

Dans un mode de réalisation non limitatif, les moyens de préhension sont :
- une encoche ; ou
- une oreillette ; ou
- une tige coudée.

Dans un mode de réalisation non limitatif, les moyens d'émission de lumière comportent une puce émettrice semi-conductrice.

### BREVE DESCRIPTION DES FIGURES

L'invention et ses différentes applications seront mieux comprises à la lecture de la description qui suit et à l'examen des figures qui l'accompagnent.
- les figures 1 et 2 représentent schématiquement un module lumineux pour véhicule automobile selon un premier mode de réalisation non limitatif de l'invention ;
- les figures 3 et 4 représentent schématiquement un module lumineux pour véhicule automobile selon un second mode de réalisation non limitatif de l'invention ;
- la figure 5 est une vue agrandie d'un système à came utilisé dans les modules lumineux des figures 1 à 4 ;
- les figures 6 et 7 représentent schématiquement une variante de réalisation du module lumineux comportant deux systèmes à came des figures 1 à 5 ;
- la figure 8 représente schématiquement une source lumineuse utilisée dans les modules lumineux des figures 1 à 7 selon un mode de réalisation non limitatif, ladite source lumineuse comprenant un capot de protection ;
- les figures 9 à 11 représentent schématiquement des modes de réalisation non limitatifs d'une source lumineuse utilisée dans les modules lumineux des figures 1 à 7, ladite source lumineuse comprenant des moyens de préhension.

### DESCRIPTION DE MODES DE REALISATION DE L'INVENTION

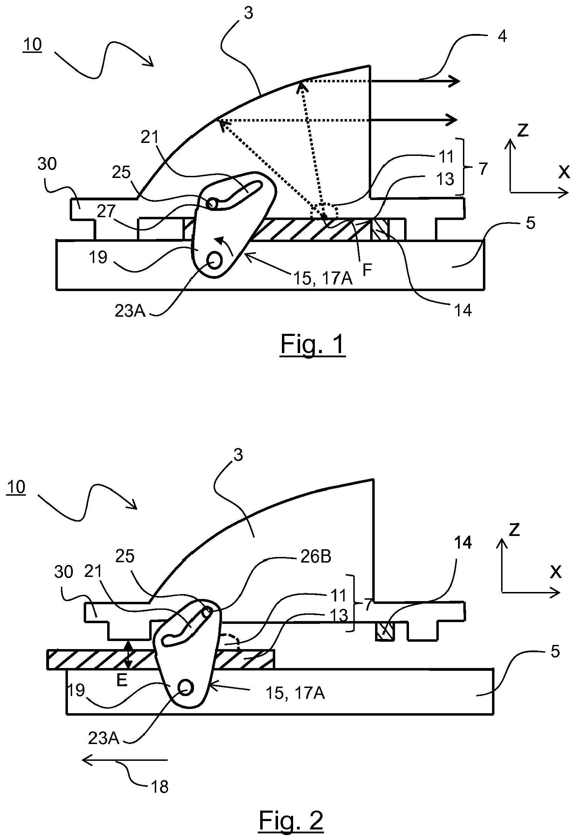

Les éléments identiques, par structure ou par fonction, apparaissant sur différentes figures conservent, sauf précision contraire, les mêmes références.
Le module lumineux 10 pour véhicule automobile selon l'invention est décrit en référence aux figures 1 à 11.
Par véhicule automobile, on entend tout type de véhicule motorisé.

Dans un mode de réalisation non limitatif pris dans la suite de la description, le module lumineux 10 appartient à un dispositif d'éclairage et/ou de signalisation. Dans une variante de réalisation non limitative, le dispositif d'éclairage et/ou de signalisation est un projecteur de véhicule automobile.

Comme illustré sur les figures 1 à 4, le module lumineux 10 comprend :
- un moyen optique 3 ;
- un support 5 du moyen optique 3 ;
- au moins une source lumineuse 7 logée dans le module lumineux 10 ;
- des moyens de déplacement 15 du moyen optique 3 par rapport au support 5 du moyen optique 3 agencés pour permettre un déplacement du moyen optique 3 entre :
   - une position de verrouillage pour maintenir ladite source lumineuse 7 sur le support 5 du moyen optique 3 ; et
   - une position de déverrouillage pour retirer ladite source lumineuse 7 du module lumineux 10.

Le module lumineux 10 est adapté pour émettre des rayons lumineux 4 formant un faisceau lumineux. Dans un exemple non limitatif, le module lumineux 10 est adapté pour assurer une fonction photométrique dite « high beam » pour réaliser un feu de route. Dans un autre exemple non limitatif, le module lumineux 10 est adapté pour assurer une fonction photométrique dite « low beam » pour réaliser, par exemple, un feu de croisement.

Les différents éléments du module lumineux 10 sont décrits en détail ci-après.

Dans un mode de réalisation non limitatif, le support 5 est un radiateur qui permet d'évacuer la chaleur provenant de la source lumineuse 7 hors du module lumineux 10. Le support 5 est fixe dans le module lumineux 10. Comme on va le voir ci-après, c'est le module optique 3 qui est mobile par rapport au support 5 et qui va permettre le retrait de la source lumineuse 7 du module lumineux 10.

La source lumineuse 7 est adaptée pour coopérer avec le module optique 3 et comprend :
- des moyens d'émission de lumière 11 ; et
- un support mécanique 13 des moyens d'émission de lumière 11 ;
- une interface de connexion électrique 16.

Dans un mode de réalisation non limitatif, les moyens d'émission de lumière 11 comportent au moins une puce émettrice semi-conductrice.
Dans une variante de réalisation non limitative, chaque puce émettrice semi-conductrice fait partie d'une diode électroluminescente. Par diode électroluminescente, on entend tout type de diodes électroluminescentes, que ce soit dans des exemples non limitatifs des LED (« Light Emitting Diode »), une OLED (« Organic LED ») ou une AMOLED (« Active-Matrix-Organic LED »), ou encore une FOLED (« Flexible OLED »).
La source lumineuse 7 est amovible, à savoir elle peut être retirée du module lumineux 10 sans retirer le module optique 3 dudit module lumineux 10. La source lumineuse 7 est ainsi interchangeable.

Dans un mode de réalisation non limitatif, la source lumineuse 7 comprend des moyens de préhension (décrits plus loin) sur le support mécanique 13 pour faciliter le retrait de la source lumineuse 7 du module lumineux 10.

Dans un mode de réalisation non limitatif, le moyen optique 3 est :
- un réflecteur ; ou
- une lentille ; ou
- un guide de lumière ; ou
- un collimateur.

Le moyen optique 3 coopère avec la source lumineuse 7 pour former les rayons lumineux 4.
Dans un mode de réalisation non limitatif, en position de verrouillage, les moyens d'émission de lumière 11 de la source lumineuse 7 sont positionnés dans une zone focale F du moyen optique 3. Cela permet d'avoir une bonne focalisation sur le module optique 3 et ainsi d'optimiser le faisceau lumineux. Dans un mode de réalisation non limitatif, le moyen optique 3 comporte au moins une butée 14 de façon à permettre un blocage et un maintien en position des moyens d'émission de lumière 11, à savoir un maintien au foyer F du moyen optique 3. Ladite au moins une butée 14 est ainsi une référence isostatique de la source de lumière 7 selon un axe X parallèle au support 5. Dans une variante de réalisation non limitative, le moyen optique 3 comporte deux butées 14. Les deux butées 14 sont adaptées pour coopérer avec des points de référence secondaires 131 de la source lumineuse 7 (décrits plus loin).

Dans une position de verrouillage, le support mécanique 13 des moyens d'émission de lumière 11 est :
- bloqué horizontalement contre ladite au moins une butée 14 ;
- bloqué verticalement par le moyen optique 3 contre le support 5 de ce moyen optique 3.
Plus particulièrement, le moyen optique 3 comprend une base 30, ladite base 30 permettant d'appuyer sur le capot de protection 8 (décrit plus loin) de la source lumineuse 7 via les points de référence primaires 130 (décrits plus loin) pour bloquer le support mécanique 13 des moyens d'émission de lumière 11 contre le support 5 du moyen optique 3.
La source de lumière 7 est ainsi maintenue en position dans le module optique 3.
Dans une position de déverrouillage, le moyen optique 3 ne plaque plus le support mécanique 13 et celui-ci est libre dans le module lumineux 10.
Dans cette position de déverrouillage, un espace E est créé entre le support 5 et le module optique 3 qui permet de libérer la source de lumière 7 et de procéder à son échange. On notera que cet espace E est également suffisant pour nettoyer les résidus de l'interface thermique qui se trouve entre la source de lumière 7, plus particulièrement entre son support mécanique 13 et le support 5 du module optique 3. On rappelle que cette interface thermique permet d'assurer une conductivité thermique entre le support 5 et la source lumineuse 7.

De moyens de déplacement 15 sont ainsi agencés pour permettre au moyen optique 3 de se déplacer par rapport à son support 5 entre la position de verrouillage et la position de déverrouillage. Le moyen optique 3 est ainsi mobile par rapport à son support 5, ce dernier étant monté fixe dans le module lumineux 10. Le support 5 n'est ainsi pas mobile dans le module lumineux 10. Le déplacement du moyen optique 3 par rapport à son support 5 est un déplacement en translation et/ou en rotation comme décrit plus loin.

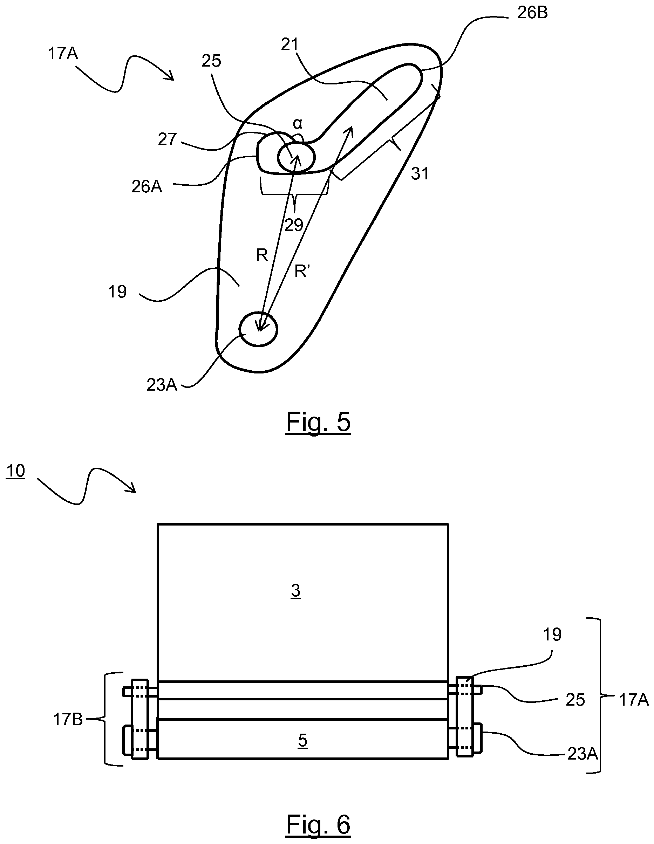

Ces moyens de déplacement 15 sont illustrés plus particulièrement à la figure 5.
Dans un mode de réalisation non limitatif, ces moyens de déplacement 15 comprennent un système à came 17A. Ce système à came 17A comporte :
- une came 19 comprenant une fente 21 ;
- un pivot 23A solidaire du support 5 du moyen optique 3 et adapté pour permettre la rotation de la came 19 par rapport audit support 5 de moyen optique 3 ;
- un téton 25 solidaire du moyen optique 3 et adapté pour glisser dans la fente 21 de la came 19 lors de la rotation de ladite came 19.
Le système à came 17A permet de transformer simplement un mouvement de rotation de la came 19 autour du pivot 23A en un mouvement de translation et/ou de rotation du moyen optique 3. Pour cela la came 19 comporte la fente 21 dans laquelle un téton 25 solidaire du moyen optique 3 est adapté pour y glisser. La fente 21 présente ainsi une forme oblongue avec une première extrémité 26A arrondie et une deuxième extrémité 26B arrondie encadrant une partie intermédiaire allongée de la fente 21.
En position de verrouillage, dans laquelle la source lumineuse 7 est maintenue sur le support 5 du moyen optique 3, le téton 25 est en contact avec la première extrémité 26A de la fente 21. Dans une variante de réalisation non limitative, cette première extrémité 26 comporte une encoche de verrouillage 27 pour le blocage de la came 19 dans la position de verrouillage.

En position de déverrouillage, le téton 25 est en contact avec la seconde extrémité 26B de la fente 21.
Dans une variante de réalisation non limitative, la partie intermédiaire de la fente 21 est courbée. Ceci permet d'assurer un déplacement progressif du téton 25 dans la fente 21 en limitant les risques de blocage de ce téton dans cette fente 21.
Dans une autre variante de réalisation non limitative illustrée sur la figure 5, la partie intermédiaire de la fente 21 comprend :
- une première partie 29 s'étendant selon un premier rayon R constant centré par rapport au pivot 23A et ;
- une seconde partie 31 s'étendant selon un second rayon R' évolutif.
La première partie 29 de rayon R constant facilite le déverrouillage de la came 19. Elle permet, en outre, d'avoir une zone de matière avec un angle α obtus entre l'encoche de verrouillage 27 et la première partie 29 de la partie intermédiaire. Cela permet d'avoir un point dur pour bloquer le téton 25 dans l'encoche de verrouillage 27.
La seconde partie 31 de rayon R' progressif améliore le mouvement du téton 25 dans la fente 21.

Différents modes de réalisation non limitatifs sont décrits ci-après.

### Premier mode de réalisation

Les figures 1 et 2 représentent schématiquement un module lumineux 10 pour véhicule automobile selon un premier mode de réalisation non limitatif. Selon ce mode de réalisation, les moyens de déplacement 15 sont agencés pour déplacer en translation le moyen optique 3 selon un axe Z perpendiculaire au support 5. Ils comportent le système à came 17A décrit précédemment.
Dans un mode de réalisation non limitatif, le moyen optique 3 du module lumineux 10 comporte deux butées 14.

La figure 1 présente les moyens de déplacement 15 du moyen optique 3 dans une position de verrouillage. Dans cette position de verrouillage, la source lumineuse 7 est bloquée horizontalement (selon l'axe X) par les deux butées 14 et verticalement (selon l'axe Z) par le moyen optique 3 (notamment par la base 30 dudit moyen optique 3) contre le support 5 de ce moyen optique 3. Le téton 25 du système à came 17A est logé dans l'encoche de verrouillage 27. Les moyens d'émission de lumière 11 sont disposés au foyer F du moyen optique 3 de sorte que les rayons lumineux 4 provenant de ces moyens d'émission 11 sont réfléchis par le moyen optique 3.
Un opérateur peut agir sur la came 19 et faire tourner cette came 19 autour du pivot 23A, selon un sens de rotation anti-horaire. Lors de la rotation de la came 19, le téton 25 glisse dans la fente 21 et soulève le moyen optique 3 en translation selon une direction selon l'axe Z.
La figure 2 présente les moyens de déplacement 15 du moyen optique 3 dans une position où le moyen optique 3 est entièrement déverrouillé. Dans cette position, le téton 25 est bloqué contre la seconde extrémité 26B de la fente 21. La came 19 ne peut plus tourner selon le sens de rotation anti-horaire. Un espace E est alors créé entre le moyen optique 3 et le support 5. Par cet espace E, il est possible de faire glisser le support mécanique 13 des moyens d'émission de lumière 11 le long du support 5 du module optique 3 pour retirer la source lumineuse 7 du module lumineux 10 par l'arrière de ce module lumineux 10 (selon le sens de la flèche 18). Une fois retiré, l'opérateur peut placer une nouvelle source lumineuse 17 et la bloquer contre les butées 14. En faisant tourner la came 19 selon le sens de rotation horaire, il est possible de déplacer de nouveau le moyen optique 3 dans sa position de verrouillage pour maintenir la nouvelle source lumineuse 7 sur l'isostatisme du moyen optique 3, à savoir pour maintenir la nouvelle source lumineuse 7 sur le support 5 du moyen optique 3 à la bonne position, grâce aux butées 14 et à la base 30 du moyen optique 3.

Afin d'augmenter encore davantage l'espace E à l'arrière du module lumineux 10, il est possible de faire basculer le moyen optique 3 vers l'avant en rotation, autour du pion 25 après le déplacement en translation selon l'axe Z.

### Deuxième mode de réalisation

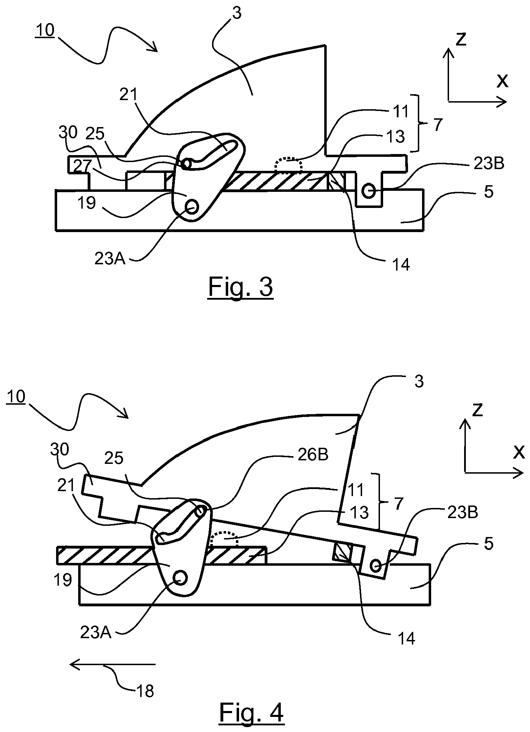

Les figures 3 et 4 représentent schématiquement un module lumineux 10 pour véhicule automobile selon un second mode de réalisation non limitatif. Selon ce mode de réalisation, les moyens de déplacement 15 sont agencés pour déplacer en rotation le moyen optique 3. Ils comportent le système à came 17A décrit précédemment.
Dans un mode de réalisation non limitatif, le moyen optique 3 du module lumineux 10 comporte deux butées 14.

La figure 3 présente les moyens de déplacement 15 du moyen optique 3 dans une position de verrouillage. Dans cette position de verrouillage, la source lumineuse 7 est bloquée horizontalement (selon l'axe X) par les butées 14 et verticalement (selon l'axe Z) par le moyen optique 3 (notamment par la base 30 dudit moyen optique 3) contre le support 5 de ce moyen optique 3. Le téton 25 du système à came 17A est logé dans l'encoche de verrouillage 27.
Un opérateur peut agir sur la came 19 et faire tourner cette came 19 autour du pivot 23A, selon un sens de rotation anti-horaire. Lors de la rotation de la came 19, le téton 25 glisse dans la fente 21 et le moyen optique 3 tourne autour d'un pivot secondaire 23B solidaire du support 5 du moyen optique 3 de sorte à créer un espace E à l'arrière du module lumineux 10.
La figure 4 présente les moyens de déplacement 15 du moyen optique 3 dans une position où le moyen optique 3 est entièrement déverrouillé. Dans cette position, le téton 25 est bloqué contre la seconde extrémité 26B de la fente 21. La came 19 ne peut plus tourner selon le sens de rotation anti-horaire. Par l'espace E, il est possible de faire glisser le support mécanique 13 des moyens d'émission de lumière 11 le long du support 5 du module optique 3 pour retirer la source lumineuse 7 du module lumineux 10 par l'arrière de ce module lumineux 10 (selon le sens de la flèche 18). Une fois retiré, l'opérateur peut placer une nouvelle source lumineuse 17 et la bloquer contre les butées 14. En faisant tourner la came 19 selon le sens de rotation horaire, il est possible de déplacer de nouveau le moyen optique 3 dans sa position de verrouillage pour maintenir la nouvelle source lumineuse 7 sur l'isostatisme du moyen optique 3, à savoir pour maintenir la nouvelle source lumineuse 7 sur le support 5 du moyen optique 3 à la bonne position, grâce aux butées 14 et à la base 30 du moyen optique 3.

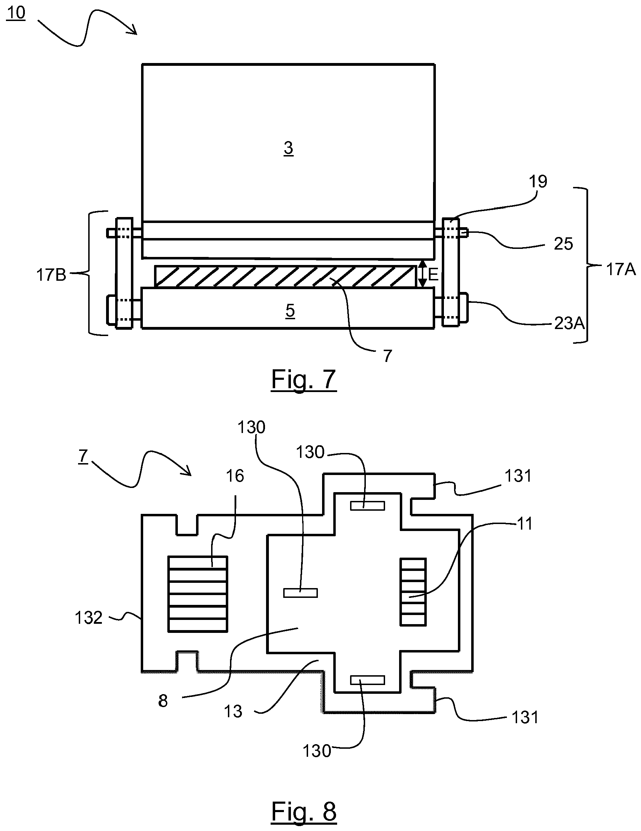

Selon une variante de réalisation des premier et deuxième modes de réalisation non limitatifs décrits précédemment, illustrée sur les figures 6 et 7 (vue arrière du module lumineux 10), les moyens de déplacement 15 comprennent deux systèmes à came 17A, 17B. Les deux systèmes à came sont disposés en regard l'un de l'autre, de part et d'autre du moyen optique 3. En utilisant ces deux systèmes à came 17A, 17B, on limite les risques de coincement du téton 25 dans la fente 21 de la came 19. Le déplacement du moyen optique 3 entre la position de verrouillage et la position de déverrouillage est alors facilité.
A la figure 6, le moyen optique 3 est dans une position de verrouillage et la source lumineuse est maintenue sur le support 5 du moyen optique 3 comme décrit précédemment.
A la figure 7, le moyen optique 3 est dans une position de déverrouillage, de sorte qu'il est possible de retirer la source lumineuse 7 du module lumineux 10 comme décrit précédemment.

La source lumineuse 7 adaptée pour être logée dans le module lumineux 10 (décrit précédemment selon le premier et deuxième mode de réalisation) pour véhicule automobile, est décrite plus en détail en référence aux figures 8 à 11.
Dans un mode de réalisation non limitatif, la source lumineuse 7 comprend une pluralité de moyens d'émission de lumière 11. Dans l'exemple non limitatif illustré sur les figures 8 à 11, il y six moyens d'émission de lumière. Cette source lumineuse 7 comprend :
- des moyens d'émission de lumière 11 ;
- un support mécanique 13 des moyens d'émission de lumière 11 comprenant :
   - des points de référence primaires 130 (appelés également points de référence en Z) sur lesquels le module optique 3 (en particulier sa base 30) vient appuyer lorsque le module optique 3 est en position de verrouillage de sorte à plaquer le support mécanique 13 contre le support 5 ;
   - des points de référence secondaires 131 (appelés également points de référence en X) adaptés pour entrer en contact avec ladite au moins une butée 14 du module lumineux 3 ;
   - une interface de connexion électrique 16 pour l'alimentation électrique et le pilotage des moyens d'émission de lumière 11.
L'interface de connexion électrique 16 est adaptée pour coopérer avec un connecteur électrique externe (non illustré) qui permet d'envoyer des commandes de pilotage à la source lumineuse 7 et de l'alimenter.

Dans un mode de réalisation non limitatif, la source lumineuse 7 comprend trois points de référence primaires 130. Dans un mode de réalisation non limitatif, les trois points de référence primaires 130 sont adaptés pour coopérer avec la base 30 du module optique 3 lorsque ledit module optique 3 est en position de verrouillage.
Dans un mode de réalisation non limitatif, les points de référence primaires 130 sont des ergots qui viennent se loger dans des contre-formes (non illustrées) du module optique 3. Dans ce cas, la base 30 du module optique 3 comprend une épaisseur dans laquelle ces contre-formes sont formées. Les contre-formes appuient sur les ergots 130 de sorte qu'en position de verrouillage le module optique 3 maintienne la source lumineuse 7 en position selon l'axe Z. La base 30 permet ainsi de gérer l'isostatisme en Z de la source lumineuse 7 via les points de références primaires 130.
Dans un mode de réalisation non limitatif illustré sur les figures 8 à 11, la source lumineuse 7 comprend en outre un capot de protection 8. Le capot de protection 8 comprend une ouverture pour laisser passer la lumière émise par la source lumineuse 7. Dans ce cas, les points de référence primaires 130 sont disposés sur le capot de protection 8. Dans l'exemple non limitatif de la figure 8, trois ergots correspondent aux points de référence primaires 130.

Dans un mode de réalisation non limitatif, la source lumineuse 7 comprend deux points de référence secondaires 131. Dans une variante de réalisation non limitative, les deux points de référence secondaires 131 sont répartis de part et d'autre des moyens d'émission de lumière 11.
Les deux points de référence secondaires 131 sont adaptés pour coopérer respectivement avec les deux butées 14 du module optique 3 décrites précédemment. Lorsque la source lumineuse 7 est positionnée sur le support 5, les deux points de référence secondaires 131 entrent en contact respectivement avec les deux butées 14.
Les butées 14 permettent ainsi de gérer l'isostatisme en X de la source lumineuse 7 via les points de références secondaires 131.

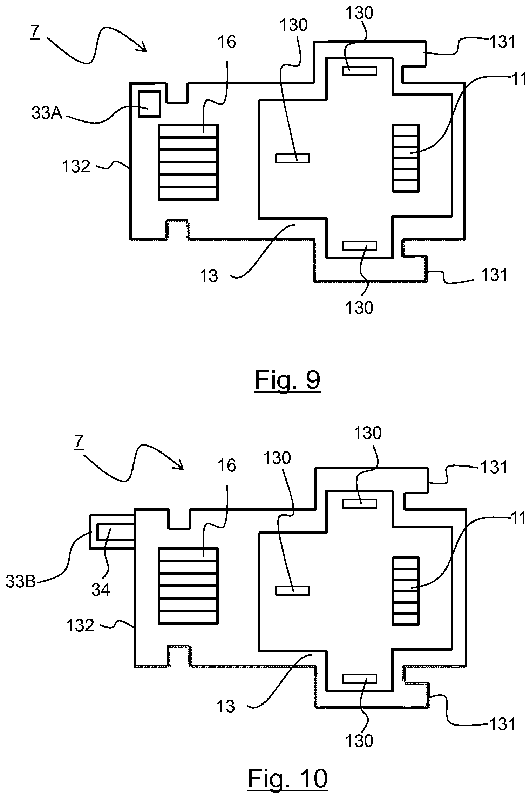

Dans un mode de réalisation non limitatif illustré sur les figures 9 à 11, la source lumineuse 7 comprend en outre des moyens de préhension 33A, 33B, 33C sur ledit support mécanique 13. Ces moyens de préhension sont disposés sur ledit support mécanique 13 à proximité de l'interface de connexion électrique 16. En particulier ils sont disposés sur l'extrémité 132 du support mécanique 13 opposée aux points de référence secondaires 131 décrits précédemment.
On notera que ces moyens de préhension sont agencés sur ledit support mécanique 13 de sorte à ne pas gêner une connexion entre un connecteur électrique externe et l'interface de connexion électrique 16.

Sur la figure 9, dans une première variante de réalisation non limitative, les moyens de préhension se présentent sous la forme d'une encoche 33A disposée en creux dans le support mécanique 13.

Sur la figure 10, dans une deuxième variante de réalisation non limitative, les moyens de préhension se présentent sous la forme d'une oreillette 33B prolongeant le support mécanique 13 et définissant une zone d'accroche 34 pour le retrait de la source lumineuse 7 du module lumineux 10.

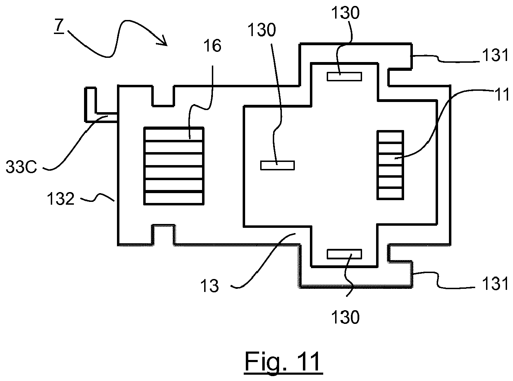

Sur la figure 11, dans une troisième variante de réalisation non limitative, les moyens de préhension se présentent sous la forme d'une tige coudée 33C définissant un angle d'accroche sensiblement droit.

Les moyens de préhension 33A, 33B, 33C peuvent être actionnés par un opérateur à l'aide d'une tige comportant un crochet. Le crochet est apte à se loger dans l'encoche 33A, dans l'oreillette 33B ou dans la tige coudée 33C pour faciliter le retrait de la source lumineuse 7 du module lumineux 10.

Bien entendu, la description de l'invention n'est pas limitée aux modes de réalisation décrits ci-dessus.
Ainsi, dans un mode de réalisation non limitatif, la came 19 peut comporter deux encoches de verrouillage 27 à chaque extrémité de la fente. De cette manière, le moyen optique 3 est bloqué en position de verrouillage et en position de déverrouillage.
Ainsi, dans un mode de réalisation non limitatif, le module lumineux peut comporter des moyens de rappel, tel qu'un ressort de rappel, pour le rappel du moyen optique 3 dans sa position de verrouillage. Par exemple, ce ressort de rappel est fixé à la fois sur le support 5 et sur le moyen optique 3.
Ainsi, dans un mode de réalisation non limitatif, les moyens de préhension peuvent comporter deux encoches 33A, ou deux oreillettes 33B ou deux tiges coudées 33C réparties de part et d'autre de l'interface de connexion électrique 16.
Ainsi, dans un mode de réalisation non limitatif, la source lumineuse 7 peut ne pas comporter de capot de protection 8. Dans ce cas, il existe trois points de référence primaires 130 directement sur le support mécanique 13 et le module optique 3 va venir appuyer sur ces points de référence primaires 130 en position de verrouillage.
Ainsi, dans un mode de réalisation non limitatif, la base 30 peut comporter un logement (non illustré) qui est adapté pour accueillir en partie la source lumineuse 7, en particulier le support mécanique 13 de ladite source lumineuse 7. Dans ce cas, le logement (en particulier le fond du logement) est adapté pour plaquer la source lumineuse 7 contre le support 5 via les points de références primaires 130. Le logement permet ainsi de gérer l'isostatisme en Z de la source lumineuse 7 via les points de références primaires 130.

Ainsi, l'invention décrite présente notamment les avantages suivants :
- on facilite le remplacement d'une source lumineuse défectueuse ;
- il n'est pas nécessaire de retirer le moyen optique 3 pour effectuer l'opération de remplacement ;
- il n'est pas nécessaire de mettre au rebut tout le module optique 3 juste pour remplacer une source lumineuse, ce qui réduit sensiblement le coût de remplacement de ladite source lumineuse ;
- une fois la source lumineuse retirée, il est possible d'identifier et de changer uniquement l'élément défectueux de cette source lumineuse 7 ;
- on utilise un système simple à manipuler pour libérer la source lumineuse. Il suffit à l'opérateur de débloquer la came pour initier sa rotation et le déplacement du moyen optique 3 ;
- l'encoche de verrouillage 27 permet de bloquer le moyen optique 3 dans sa position de verrouillage ce qui évite tout déplacement de ce moyen optique 3 au cours de l'utilisation du véhicule automobile.

## Revendications

1. Module lumineux pour véhicule automobile, ledit module lumineux (10) comprenant :
- un moyen optique (3) ;
- un support (5) du moyen optique (3) ;
- au moins une source lumineuse (7) logée dans le module lumineux (10), ladite source lumineuse (7) étant amovible et comprenant :
- des moyens d'émission de lumière (11) ;
- un support mécanique (13) des moyens d'émission de lumière (11) ;
- des moyens de déplacement (15) du moyen optique (3) agencés pour permettre un déplacement du moyen optique (3) entre :
- une position de verrouillage pour maintenir ladite source lumineuse (7) sur le support (5) du moyen optique (3) ; et
- une position de déverrouillage pour retirer ladite source lumineuse (7) du module lumineux (10).

2. Module lumineux selon la revendication 1, dans lequel, en position de verrouillage, les moyens d'émission de lumière (11) de la source lumineuse (7) sont positionnés dans une zone focale (F) du moyen optique (3).

3. Module lumineux selon l'une quelconque des revendications 1 à 2, dans lequel le moyen optique (3) comporte au moins une butée (14) pour bloquer le positionnement de la source lumineuse (7) dans le module lumineux (10).

4. Module lumineux selon l'une quelconque des revendications 1 à 3, dans lequel les moyens de déplacement (15) sont agencés pour déplacer en translation et/ou en rotation le moyen optique (3).

5. Module lumineux selon l'une quelconque des revendications 1 à 4, dans lequel les moyens de déplacement (15) comprennent un système à came (17A)

6. Module lumineux selon la revendication précédente 5, dans lequel ledit système à came (17A) comprend :
- une came (19) comportant une fente (21) ;
- un pivot (23A) solidaire du support (5) du moyen optique (3) et adapté pour permettre la rotation de la came (19) par rapport audit support (5) de moyen optique ;
- un téton (25) solidaire du moyen optique (3) et adapté pour glisser dans la fente (21) de la came (19) lors de la rotation de ladite came (19).

7. Module lumineux selon la revendication 6, dans lequel la fente (21) de la came (19) comporte une encoche de verrouillage (27) pour le blocage de la came (19) dans la position de verrouillage du moyen optique (3).

8. Module lumineux selon la revendication 6 ou la revendication 7, dans lequel la fente (21) de la came (19) a une forme oblongue.

9. Module lumineux selon l'une quelconque des revendications 6 à 8, dans lequel la fente (21) de la came (19) est courbée.

10. Module lumineux selon l'une quelconque des revendications 6 à 9, dans lequel la fente (21) comprend une première partie (29) s'étendant selon un premier rayon (R) constant centré par rapport au pivot (23A) et une seconde partie (31) s'étendant selon un second rayon (R') évolutif.

11. Module lumineux selon l'une quelconque des revendications 6 à 10, dans lequel les moyens de déplacement (15) comprennent en outre un pivot secondaire (23B) solidaire du support (5) du moyen optique et adapté pour permettre la rotation du moyen optique (3) autour de ce pivot secondaire (23B) lors de la rotation de la came (19) autour du pivot (23A).

12. Module lumineux selon l'une quelconque des revendications 6 à 11, dans lequel les moyens de déplacement (15) comprennent un système à came secondaire (17B), les deux systèmes à cames (17A, 17B) étant disposés en regard l'un de l'autre, de part et d'autre du moyen optique (3).

13. Module lumineux selon l'une quelconque des revendications 1 à 12, dans lequel ladite au moins une source lumineuse (7) comprend en outre des moyens de préhension (33A, 33B, 33C) sur ledit support mécanique (13).

14. Source lumineuse adaptée pour être logée dans un module lumineux (10) pour véhicule automobile, ladite source lumineuse (7) comprenant :
- des moyens d'émission de lumière (11) ;
- un support mécanique (13) des moyens d'émission de lumière (11) ;
- des moyens de préhension (33A, 33B, 33C) sur ledit support mécanique (13).

15. Source lumineuse selon la revendication 14, dans lequel les moyens de préhension (33A, 33B, 33C) sont :
- une encoche (33A) ; ou
- une oreillette (33B) ; ou
- une tige coudée (33C).
